# EUROPEAN PATENT APPLICATION

(11) **EP 4 019 247 A1**
(43) Date of publication of application: **29.06.2022**
(21) Application number: 21216239.0
(22) Date of filing: 21.12.2021
(51) Int. Cl.: B32B 27/08, B32B 7/12, B32B 27/30, B32B 27/36, H01Q 1/42

(54) **RADIO WAVE TRANSMISSION COVER AND METHOD FOR MANUFACTURING THE SAME**

(30) Priority: 25.12.2020 JP 2020217190
(71) Applicant: TOYOTA JIDOSHA KABUSHIKI KAISHA, Toyota-shi Aichi 471-8571 (JP); National University Corporation Kobe University, Kobe-shi, Hyogo 657-8501 (JP)
(72) Inventor: KUBOYAMA, Daiki, Toyota-shi, 471-8571 (JP); MURAI, Jyunya, Toyota-shi, 471-8571 (JP); MINAMI, Hideto, Kobe-shi, 657-8501 (JP)
(74) Representative: J A Kemp LLP

(57) **Abstract**

Provided is a radio wave transmission cover having a manufacturability at low cost and a suppressed peeling of layer, which comprises a resin substrate; a transparent film layer serving as an exposed portion; a transparent ion-exchange resin layer disposed between the resin substrate and the transparent film layer; an adhesive layer disposed between the resin substrate and the transparent ion-exchange resin layer; and a discontinuous film of Ag particles formed on a surface on the resin substrate side of the transparent ion-exchange resin layer, wherein a transparent ion-exchange resin of the transparent ion-exchange resin layer has a resin skeleton with an ion-exchangeable functional group, and a distance Ra between a Hansen solubility parameter (HSP) value of the transparent ion-exchange resin and a HSP value of the transparent film is 20 or less, and a method for manufacturing the same.

## Description

### BACKGROUND

### Technical Field

The present disclosure relates to a radio wave transmission cover and a method for manufacturing the same.

### Background Art

Recently, a vehicle including a radio wave radar device, such as a millimeter wave radar device, as a sensor device to sense a vehicle, such as an automobile, a pedestrian, an obstacle, or the like, has been developed. The radio wave radar device is generally covered with a radio wave transmission cover using a metallic film to provide metallic luster, and the radio wave transmission cover is required to have excellent metallic luster and radio wave transparency.

For example, the radio wave transmission cover formed by vapor deposition of a decorative layer with indium (In) and tin (Sn) has been known. The vapor deposition of In and Sn generally forms a fine sea-island structure and shows radio wave transparency. However, In and Sn have low reflectivity and a film needs to be thickened to increase the metallic luster, and the sea-island structure possibly becomes a continuous film to reduce the radio wave transparency.

On the other hand, JP 2020-55308 A discloses a radio wave transmission cover including a radio wave transmission layer formed of a discontinuous metal film in which metal microparticles are dispersed, instead of the vapor deposition of In and Sn. The radio wave transmission cover disclosed in JP 2020-55308 A includes a resin substrate, an adhesive layer, a substrate film, a radio wave transmission layer, an adhesive layer, and a transparent resin material in the order from the lower side. For coexistence of both of metallic luster and radio wave transparency, the radio wave transmission cover disclosed in JP 2020-55308 A needs to adjust a porosity of a surface of the radio wave transmission layer to be a predetermined value or more. However, since the metal microparticles do not adhere to a resin adhesive layer, adhesion between the radio wave transmission layer and an adhesive layer is difficult. Additionally, the discontinuous metal films of the metal microparticles do not have adhesiveness with the substrate film, and therefore there is a concern of peeling of the discontinuous metal films.

Furthermore, the conventional radio wave transmission cover manufactured by vapor deposition of In and Sn and the radio wave transmission cover using the discontinuous metal films in the radio wave transmission layer as in JP 2020-55308 A includes a transparent resin on an exposed portion by injection molding and press molding, and the manufacturing process is complicated, thus having a problem of cost increase.

### SUMMARY

As described above, in the conventional radio wave transmission cover manufactured by vapor deposition of In and Sn, there may be a case where both of metallic luster and radio wave transparency cannot coexist, and the cost increases in some cases. In the radio wave transmission cover using the discontinuous metal films in the radio wave transmission layer as in JP 2020-55308 A, the radio wave transmission layer possibly peels off, and the cost increases in some cases. Accordingly, the present disclosure provides a radio wave transmission cover having a manufacturability at low cost and a suppressed peeling of layer.

The present inventors examined various means to solve the problem, and found that a radio wave transmission cover having a suppressed peeling of layer is manufacturable at low cost by forming a discontinuous film of Ag particles on a transparent ion-exchange resin layer and controlling a distance Ra between HSP values of the transparent ion-exchange resin and a transparent film disposed on the transparent ion-exchange resin within a specific distance. Thus, the inventors have achieved the present disclosure.

That is, the gist of the present disclosure is as follows.
(1) A radio wave transmission cover comprising: a resin substrate; a transparent film layer serving as an exposed portion; a transparent ion-exchange resin layer disposed between the resin substrate and the transparent film layer; an adhesive layer disposed between the resin substrate and the transparent ion-exchange resin layer; and a discontinuous film of Ag particles formed on a surface on the resin substrate side of the transparent ion-exchange resin layer, wherein a transparent ion-exchange resin of the transparent ion-exchange resin layer has a resin skeleton with an ion-exchangeable functional group, and a distance Ra between a Hansen solubility parameter (HSP) value of the transparent ion-exchange resin and a HSP value of the transparent film is 20 or less.
(2) The radio wave transmission cover according to (1), wherein a part or all of the Ag particles are embedded in the transparent ion-exchange resin layer.
(3) The radio wave transmission cover according to (1) or (2), wherein a density of the ion-exchangeable functional group in the transparent ion-exchange resin is 1.5 mol/L or more.
(4) The radio wave transmission cover according to any one of (1) to (3), wherein the distance Ra between the HSP value of the transparent ion-exchange resin and the HSP value of the transparent film is 16.8 or less.
(5) The radio wave transmission cover according to any one of (1) to (4), wherein the transparent ion-exchange resin is at least one selected from a copolymer of monooctyl maleate and one or more monomers selected from styrene, butyl methacrylate, and vinyl toluene; and a copolymer of 4-vinylbenzoic acid and one or more monomers selected from styrene, butyl methacrylate, and vinyl toluene.
(6) A method for manufacturing the radio wave transmission cover according to any one of (1) to (5) comprising: forming a transparent ion-exchange resin layer on a surface of a transparent film; treating the transparent ion-exchange resin layer with an Ag ion solution to introduce Ag ions into the transparent ion-exchange resin layer by ion exchange; treating the transparent ion-exchange resin layer with a reducing agent and depositing Ag particles on a surface of the transparent ion-exchange resin layer to form a discontinuous film of the Ag particles on the surface of the transparent ion-exchange resin layer; and adhering a resin substrate and a transparent film in which the discontinuous film of the Ag particles is formed on the surface of the transparent ion-exchange resin layer via an adhesive layer with the discontinuous film of the Ag particles side facing the resin substrate.

The present disclosure allows manufacturing the radio wave transmission cover having a suppressed peeling of layer at low cost.

### BRIEF DESCRIPTION OF THE DRAWINGS

FIG. 1 illustrates a cross-sectional schematic diagram of a radio wave transmission cover according to one embodiment of the present disclosure; and
FIGS. 2A and 2B illustrate transmission electron microscope (TEM) images of a cross-sectional surface of a used film 2 of a radio wave transmission cover of Example 12, FIG. 2A illustrates the TEM image (one hundred thousand powers) in the cross-sectional surface of the film 2 of Example 12, and FIG. 2B illustrates the TEM image (two hundred thousand powers) in the cross-sectional surface of the film 2 of Example 12.

### DETAILED DESCRIPTION

The following describes embodiments of the present disclosure in detail.

The present disclosure relates to a radio wave transmission cover. The radio wave transmission cover according to the present disclosure comprises a resin substrate, a transparent film layer serving as an exposed portion, a transparent ion-exchange resin layer disposed between the resin substrate and the transparent film layer, and an adhesive layer disposed between the resin substrate and the transparent ion-exchange resin layer. A discontinuous film of Ag particles is formed as a radio wave transmission layer on a surface on the resin substrate side of the transparent ion-exchange resin layer.

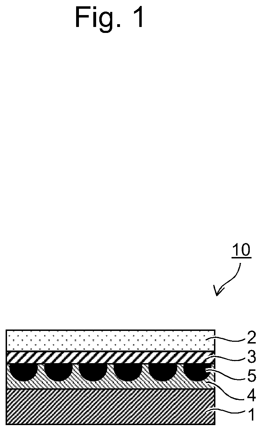

FIG. 1 illustrates a cross-sectional schematic diagram of the radio wave transmission cover according to one embodiment of the present disclosure. As illustrated in FIG. 1, a radio wave transmission cover 10 comprises a resin substrate 1, a transparent film layer 2 serving as the exposed portion, a transparent ion-exchange resin layer 3 disposed between the resin substrate 1 and the transparent film layer 2, and an adhesive layer 4 disposed between the resin substrate 1 and the transparent ion-exchange resin layer 3. A discontinuous film 5 of Ag particles is formed on a surface on the resin substrate 1 side of the transparent ion-exchange resin layer 3. That is, the radio wave transmission cover 10 has a structure in which the resin substrate 1, the adhesive layer 4, the discontinuous film 5 of the Ag particles, the transparent ion-exchange resin layer 3, and the transparent film layer 2 are stacked in this order. In the radio wave transmission cover 10, the resin substrate 1 and the transparent ion-exchange resin layer 3 are adhered via the adhesive layer 4.

The resin substrate is transparent in some embodiments. The resin substrate is not specifically limited, examples of which include polyethylene terephthalate, polycarbonate, polymethyl methacrylate, and acrylic, and polycarbonate is used in some embodiments.

The resin substrate usually has a thickness of 0.1 mm to 10 mm and 0.3 mm to 7.5 mm in some embodiments.

A transparent film constituting the transparent film layer is not specifically limited, examples of which include polyethylene terephthalate, polycarbonate, polymethyl methacrylate, and acrylic, and polycarbonate is used in some embodiments.

The transparent film layer usually has a thickness of 10 µm to 3 mm, and 50 µm to 500 µm in some embodiments. The radio wave transmission cover of the present disclosure can protect a superficial layer portion by the transparent film layer without forming a transparent resin for protection of the superficial layer portion.

The transparent ion-exchange resin layer is made of transparent ion-exchange resin having an ion-exchangeable functional group in a resin skeleton. Since both of the ion-exchange resin layer and the film layer disposed on the ion-exchange resin layer are transparent, when the radio wave transmission cover is viewed from the above, Ag particles are seen, and the radio wave transmission cover has excellent metallic luster.

The transparent ion-exchange resin may be a polymer of a monomer having the ion-exchangeable functional group or may be a copolymer of two or more monomers having ion-exchangeable functional groups, or may be a copolymer of a monomer having an ion-exchangeable functional group and the other monomer not having an ion-exchangeable functional group. The monomer having the ion-exchangeable functional group is not specifically limited, for example, a monomer having a carboxyl group and/or a sulfo group can be used, and a monomer having ethylenically unsaturated bond and a carboxyl group and/or a sulfo group is used in some embodiments. The monomer having the ion-exchangeable functional group is not specifically limited, and, for example, monooctyl maleate, 4-vinylbenzoic acid, C₄ to C₂₄ unsaturated fatty acids (for example, C₄ to C₂₄ monounsaturated fatty acids, C₁₈ to C₂₂ di-unsaturated fatty acids, C₁₈ to C₂₀ tri-unsaturated fatty acids), 4-vinylphenyl acetate, vinyl 2-phenylpropanoate, cinnamic acid, succinic acid, adipic acid, phthalic acid, isophthalic acid, terephthalic acid, dimer acid, acrylic acid, methacrylic acid, crotonic acid, itaconic acid, maleic acid, fumaric acid, mesaconic acid, vinylsulfonic acid, allylsulfonic acid, styrene sulfonic acid, and taurine can be used, and monooctyl maleate and 4-vinylbenzoic acid are used in some embodiments. On the other hand, the other monomer is not specifically limited, and, for example, a monomer having ethylenically unsaturated bond can be used, and styrene, butyl methacrylate, and vinyl toluene are used in some embodiments.

The transparent ion-exchange resin is a copolymer of a monomer having an ion-exchangeable functional group and the other monomer not having an ion-exchangeable functional group in some embodiments. A ratio of the monomer having the ion-exchangeable functional group to the other monomer is 2:1 to 1:10 by molar ratio in some embodiments, and 1:1 to 1:5 in some embodiments. Examples of the copolymer include a copolymer of monooctyl maleate and a copolymer of 4-vinylbenzoic acid. A copolymer of monooctyl maleate and one or more monomers selected from styrene, butyl methacrylate, and vinyl toluene, and a copolymer of 4-vinylbenzoic acid and one or more monomers selected from styrene, butyl methacrylate, and vinyl toluene are used in some embodiments.

The monomer having the ion-exchangeable functional group and the other monomer have a Hildebrand solubility parameter δ (a SP value) of 18 to 30 in some embodiments, and 19 to 28 in some embodiments. With the SP values of the monomers of 18 to 30, when two or more monomers are used, the monomers easily mix and adhesiveness increases, and therefore separation can be suppressed in polymerization and the adhesiveness with the transparent film is ensured.

A density of the ion-exchangeable functional group in the transparent ion-exchange resin is 1.5 mol/L or more with respect to the transparent ion-exchange resin in some embodiments, and 2 mol/L or more in some embodiments. With the density of the ion-exchangeable functional group in the transparent ion-exchange resin of 1.5 mol/L or more, since ion-exchange capacity with Ag ions is sufficiently high, the discontinuous film of the Ag particles having excellent metallic luster is formed. The density of the ion-exchangeable functional group in the transparent ion-exchange resin is 20 mol/L or less in some embodiments and 10 mol/L or less in some embodiments. The density of the ion-exchangeable functional group in the transparent ion-exchange resin is from 1.5 mol/L to 20 mol/L in some embodiments and from 2 mol/L to 10 mol/L in some embodiments. The density of the ion-exchangeable functional group can be obtained by calculation using a molecular structure and a density of the monomer.

A distance Ra between a Hansen solubility parameter (HSP) value of the transparent ion-exchange resin and a HSP value of the transparent film is 20 or less (Ra ≤ 20) and 16.8 or less (Ra ≤ 16.8) in some embodiments. The distance Ra of 20 or less increases the adhesiveness between the transparent ion-exchange resin and the transparent film, and peeling of the layer can be suppressed. The HSP distance can be obtained by the following formula: HSP distance Ra = {4 × (δD1 - δD2)² + (δP1 - δP2)² + (δH1 - δH2)²}^{0.5}, wherein δD, δP, and δH are a dispersion force term (δD), a polar term (δP), and a hydrogen bonding term (δH) of the HSP value, respectively, and 1 and 2 indicate the transparent ion-exchange resin and the transparent film, respectively.

The transparent ion-exchange resin layer usually has a thickness of 0.5 µm to 10 µm, and 0.7 µm to 4 µm in some embodiments.

The discontinuous film of the Ag particles constitute the radio wave transmission layer. The discontinuous film of the Ag particles have gaps between the Ag particles. The gaps between the Ag particles ensure radio wave transparency. In the discontinuous film of the Ag particles, the Ag particles is formed in an island pattern in some embodiments. That is, each of the Ag particles is independent, and the respective Ag particles are present slightly away from one another.

The shape of Ag particle is not specifically limited and, for example, may be a spherical shape, an ellipsoid shape, a plate shape, a flaky shape, a scaly shape, a dendritic shape, a rod shape, a wire shape, and an irregular shape.

The average particle size of the Ag particles is from 5 nm to 200 nm in some embodiments, from 10 nm to 200 nm in some embodiments, and from 10 nm to 150 nm in some embodiments. When the average particle size of the Ag particles is from 5 nm to 200 nm, visible light is reflected by the Ag particles, and the Ag particles can transmit a millimeter wave and thus have radio wave transparency. With the present disclosure, the average particle size of the Ag particles refers to a number average particle size of a major axis (a maximum diameter) of the particles measured with an FE-SEM (fifty thousand powers) observation image of the film surface. In a case where the Ag particles have a spherical shape, the average particle size refers to a number average particle size of the diameters of the Ag particles.

In the discontinuous film of the Ag particles, a part or all of the respective Ag particles are embedded in the transparent ion-exchange resin layer. Accordingly, the Ag particles do not easily peel, and the adhesiveness between the discontinuous film of the Ag particles and the transparent ion-exchange resin layer increases, thereby allowing suppressing peeling of the layer. In the present disclosure, the Ag particles are deposited on the surface of the transparent ion-exchange resin layer by the manufacturing method described later, and thus the structure in which a part or all of the Ag particles are embedded in the transparent ion-exchange resin layer can be formed.

The discontinuous film of the Ag particles usually have the thickness of 5 nm to 200 nm, and 10 nm to 150 nm in some embodiments.

The adhesive layer is disposed between the resin substrate and the transparent ion-exchange resin layer, and the layers are adhered via the adhesive layer. Although the discontinuous film of the Ag particles is formed on the surface of the transparent ion-exchange resin layer, the Ag particles do not adhere to a general resin adhesive layer.

The adhesive layer is a resin adhesive layer in some embodiments. As an adhesive agent, a resin adhesive agent can be used and is not specifically limited. For example, an acrylic resin, a polyamide resin, a polyester resin, an epoxy resin, a rubber-based resin, a vinyl acetate-based resin, and a linear polyurethane resin can be used, and an acrylic resin is used in some embodiments.

The adhesive layer usually has a thickness of 10 µm to 300 µm and 15 µm to 100 µm in some embodiments.

The radio wave transmission cover of the present disclosure can be manufactured by adhering the resin substrate and the transparent film in which the discontinuous film of the Ag particles is formed on the surface of the transparent ion-exchange resin layer via the adhesive layer.

Specifically, the method for manufacturing the radio wave transmission cover of the present disclosure comprises: forming the transparent ion-exchange resin layer on the surface of the transparent film (step 1); treating the transparent ion-exchange resin layer with an Ag ion solution to introduce the Ag ions into the transparent ion-exchange resin layer by ion exchange (step 2); treating the transparent ion-exchange resin layer with a reducing agent and depositing the Ag particles on the surface of the transparent ion-exchange resin layer to form the discontinuous film of the Ag particles on the surface of the transparent ion-exchange resin layer (step 3); and adhering the resin substrate and the transparent film in which the discontinuous film of the Ag particles is formed on the surface of the transparent ion-exchange resin layer via the adhesive layer with the discontinuous film of the Ag particles side facing the resin substrate (step 4).

In the step 1, the transparent ion-exchange resin layer is formed on the surface of the transparent film. The transparent ion-exchange resin layer can be formed by, for example, applying a solution of the transparent ion-exchange resin over the transparent film and drying to remove the solvent. The solution of the transparent ion-exchange resin can be applied, for example, by spin coating. The drying condition is, for example, from 5 minutes to 72 hours at 25°C to 140°C.

In the step 2, the transparent ion-exchange resin layer is treated with the Ag ion solution. Through the treatment, the ion-exchangeable functional group in the transparent ion-exchange resin is ion-exchanged with the Ag ions and the Ag ions are introduced into the transparent ion-exchange resin layer. Since the ion-exchangeable functional group is dispersed in the layer, the introduced Ag ions are embedded in the layer. The ion-exchangeable functional group need not be completely replaced by the Ag ions, and a part of the ion-exchangeable functional group may remain as the functional group.

The Ag ion solution is not specifically limited, a salt solution of Ag ions can be used, and examples of the salt include nitrate, sulfate, chloride, carbonate, acetate, and phosphate. The Ag ion solution is a silver nitrate solution in some embodiments.

The Ag ion solution usually has a concentration of 0.001 M (mol/L) to 0.5 M and 0.05 M to 0.15 M in some embodiments.

The treatment with the Ag ion solution can be performed by, for example, immersing the transparent ion-exchange resin layer into the Ag ion solution. As the treatment condition with the Ag ion solution, the treatment temperature is usually from 10°C to 50°C, from 20°C to 30°C in some embodiments, and the treating time is usually from 10 seconds to 120 minutes, and from 1 minute to 60 minutes in some embodiments.

In the step 3, the transparent ion-exchange resin layer is treated with a reducing agent. Through the treatment, the Ag ions diffuse into the surface of the transparent ion-exchange resin layer where the reducing agent is present and are reduced to the Ag particles, the Ag particles are deposited with the gaps between them, and the discontinuous film of the Ag particles is formed on the surface of the transparent ion-exchange resin layer. Usually, when the Ag ions are reduced to the Ag particles, the ion-exchangeable functional group into which the Ag ions have been introduced returns to the ion-exchangeable functional group.

The reducing agent is not specifically limited, and examples of which include a phosphoric acid-based compound, a boron hydride compound, and a hydrazine derivative. Examples of the phosphoric acid-based compound include hypophosphorous acid, phosphorous acid, pyrophosphoric acid, and polyphosphoric acid. Examples of the boron hydride compound include methylhexaborane, dimethylamine borane, diethylamine borane, morpholine borane, pyridinamine borane, piperidine borane, ethylenediamine borane, ethylenediamine-bis borane, t-butylamine borane, imidazole borane, methoxyethylamine borane, and sodium borohydride. As the hydrazine derivative, for example, a hydrazine salt, such as hydrazine sulphate and hydrazine hydrochloride, and a hydrazine derivative, such as pyrazoles, triazoles, and hydrazides, can be used. Among them, as the pyrazoles, in addition to pyrazole, a pyrazole derivative, such as 3,5-dimethylpyrazole and 3-methyl-5-pyrazolone, can be used. As the triazoles, for example, 4-amino-1,2,4-triazole and 1,2,3-triazole can be used. As the hydrazides, for example, adipic acid hydrazide, maleic hydrazide, and carbohydrazide can be used. As the reducing agent, dimethylamine borane (DMAB) is used in some embodiments.

The treatment with the reducing agent can be performed by, for example, immersing the transparent ion-exchange resin layer into a reducing agent solution. The reducing agent solution usually has a concentration of 0.01 mM to 500 mM, 0.01 mM to 1 mM in some embodiments, and 0.1 mM to 0.5 mM in some embodiments. With the present disclosure, when the concentration of the reducing agent solution is low, for example, 0.01 mM to 1 mM, the Ag particles are deposited with the Ag particles more deeply embedded in the transparent ion-exchange resin layer, and thus adhesive force between the Ag particles and the transparent ion-exchange resin layer can be increased. As the treatment condition with the reducing agent, the treatment temperature is usually from 10°C to 60°C, from 25°C to 60°C in some embodiments, and 50°C in some embodiments, and the treating time is usually from 10 seconds to 60 minutes, from 10 seconds to 30 minutes in some embodiments, and from 30 seconds to 5 minutes in some embodiments.

In the step 4, the resin substrate and the transparent film in which the discontinuous film of the Ag particles is formed on the surface of the transparent ion-exchange resin layer are adhered via the adhesive layer with the discontinuous film of the Ag particles side facing the resin substrate. Through the treatment, the resin substrate is adhered with the transparent ion-exchange resin layer via the adhesive layer. The treatment is usually performed at 10°C to 180°C.

The radio wave transmission cover of the present disclosure can be used as, for example, a radio wave transmission cover of a radio wave radar device, such as a millimeter wave radar device.

### Examples

The following further specifically describes the present disclosure using examples. However, the technical scope of the present disclosure is not limited to the examples.

### Preparation of Ion-Exchange Resin

As the monomer having the ion-exchangeable functional group, monooctyl maleate and 4-vinylbenzoic acid having the carboxyl group were used, as a copolymerizable monomer, styrene, butyl methacrylate, and vinyl toluene were used, toluene and ethanol were used as a solvent, and AIBN was used as a polymerization initiator. The monomers and the solvent in the amounts shown in Table 2 were mixed to prepare a monomer solution, and the AIBN was added to the monomer solution and polymerized to obtain a solution of ion-exchange resin. Table 1 shows molecular weights, HSP values, and SP values of the used monomers.

**[Table 1]**

| | Monooctyl maleate | 4-Vinylbenzoic acid | Styrene | Vinyl toluene | Butyl methacrylate |
|---|---|---|---|---|---|
| Structure | 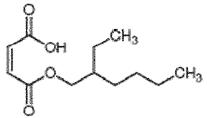 | 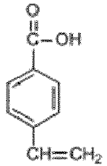 | 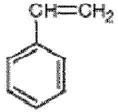 | 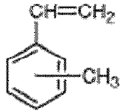 | 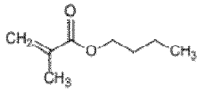 |
| Molecular weight Mw | 228.29 | 148.16 | 104.15 | 118.18 | 142.2 |
| HSP value* | 25.50, 4.71, 8.56 | 19.53, 3.53, 9.02 | 19.80, 1.17, 0 | 24.47, 0.86, 0 | 24.09, 4.56, 5.13 |
| SP value δ | 27.31 | 21.80 | 19.83 | 27.48 | 25.05 |

| | | | | | |
|---|---|---|---|---|---|
| *The HSP value indicates values of the dispersion force term (δD), the polar term (δP), and the hydrogen bonding term (δH) from the left. | | | | | |

### Example 1

As the transparent film, a polycarbonate (PC) film (thickness 400 µm, manufactured by SUMIKA ACRYL, TECHNOLLOY (registered trademark) C000) was provided, and as the resin substrate, a transparent polycarbonate (PC) sheet (thickness 2 mm, manufactured by SUMIKA ACRYL, TECHNOLLOY (registered trademark) C000) was provided.

The polycarbonate film as the substrate was spin-coated with 250 µL of a solution of the ion-exchange resin having the composition shown in Table 2 under the condition for 15 seconds at 1000 rpm and then for 60 seconds at 3000 rpm, and vacuum-dried at 40°C for one hour to obtain a polycarbonate film (film 1) in which an ion-exchange resin layer was formed on its surface.

Silver nitrate (AgNO₃) (manufactured by NACALAI TESQUE, 31018-14) was dissolved in pure water to prepare 0.1 M of an AgNO₃ solution. The film 1 was immersed in the AgNO₃ solution at room temperature (25°C) for five minutes, and Ag ions were introduced in the ion-exchange resin layer by ion exchange.

Dimethylamine borane (DMAB) (manufactured by Wako, 028-08401) was dissolved in pure water to prepare 0.2 mM of a DMAB solution. After cleaning the film with water, the film was immersed in the DMAB solution at 50°C for two minutes, the Ag ions were reduced, and the Ag particles were deposited on the surface of the ion-exchange resin layer, and then the film was cleaned with water and dried to obtain a film (film 2) in which a discontinuous film of the Ag particles were formed on the surface of the ion-exchange resin layer.

As an adhesive layer, an adhesive sheet made of acrylic resin (thickness 18 µm, manufactured by TOYOCHEM, BPS5260) was disposed between the film 2 prepared as described above and the PC sheet, they were adhered with the discontinuous film of the Ag particles of the film 2 facing the resin substrate side at room temperature to obtain a radio wave transmission cover of Example 1. The layer structure of the radio wave transmission cover is, in the order from the lower side, the PC sheet, the adhesive layer, the discontinuous film of the Ag particles, the ion-exchange resin layer, and the PC film layer, and the PC sheet and the ion-exchange resin layer are adhered via the adhesive layer.

### Examples 2 to 12

Except that the ion-exchange resin was changed to the ion-exchange resins having the compositions shown in Table 2, radio wave transmission covers of Examples 2 to 12 were obtained similarly to Example 1.

### Example 13

Except that the ion-exchange resin was changed to the ion-exchange resin having the HSP value shown in Table 2, a radio wave transmission cover of Example 13 was obtained similarly to Example 1.

### Comparative Example 1

Except that the ion-exchange resin was changed to the ion-exchange resin having the composition shown in Table 2, a radio wave transmission cover of Comparative Example 1 was obtained similarly to Example 1.

### Comparative Example 2

Except that the ion-exchange resin was changed to polyamic acid (manufactured by I.S.T, Pyre-M.L. (registered trademark) RC-5019), which was a colored resin, a radio wave transmission cover of Comparative Example 2 was obtained similarly to Example 1.

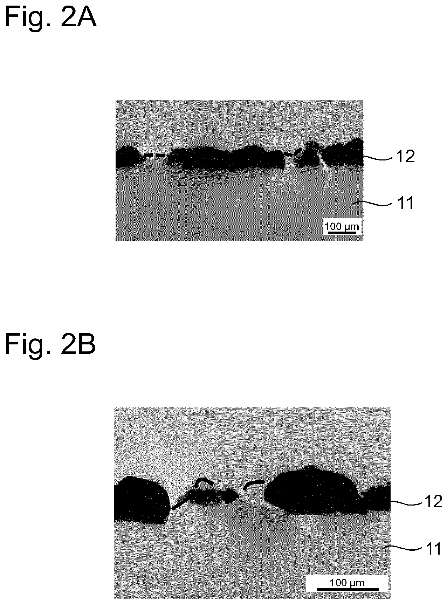

Through observation of the surfaces of the used films 2 of the radio wave transmission covers of Examples 1 to 13 with a scanning electron microscope (a SEM), it was confirmed that the Ag particles were deposited in island patterns on the surfaces of the films, gaps were present between the Ag particles, and the discontinuous film of the Ag particles were formed. FIGS. 2A and 2B illustrate transmission electron microscope (TEM) images of the cross-sectional surface of the used film 2 of the radio wave transmission cover of Example 12. FIG. 2A illustrates the TEM image (one hundred thousand powers) of the cross-sectional surface of the film 2 of Example 12, and FIG. 2B illustrates the TEM image (two hundred thousand powers) of the cross-sectional surface of the film 2 of Example 12. As illustrated in FIG. 2A and FIG. 2B, Ag particles 12 were embedded in a transparent ion-exchange resin layer 11.

Table 2 shows the compositions and the properties of the used ion-exchange resins of the radio wave transmission covers of Examples 1 to 13 and Comparative Examples 1 and 2. Here, the carboxyl group density was obtained by calculation using a molecular structure and a density of the monomer. The HSP value was obtained from the molecular structure of the monomer by calculation by Hoftyzer-Van Krevelen method, and in the use of two or more monomers, the HSP value was obtained by arithmetic average. The distance Ra of the HSP values between the ion-exchange resin and the transparent film was obtained from the HSP value of each monomer shown in Table 1 and the HSP value (δD, δP, δH = 18.2, 5.9, 6.9) of polycarbonate by calculation. The values of the database for HSP values referred to as HSPiP were used as the HSP values of polycarbonate.

The ion-exchange resins of the radio wave transmission covers of Examples 1 to 13 and Comparative Examples 1 and 2 were evaluated for adhesiveness with the transparent films, Ag ion-exchange capacity (reducing efficiency), and transparency as follows.

### Adhesiveness between Ion-Exchange Resin and Transparent Film

The films 1 of Examples 1 to 13 and Comparative Examples 1 and 2 were evaluated for adhesiveness in the following procedures 1 to 3. 1: Using a cutter, about 40 mm of cuts that met one another at an angle of 30 degrees and reaching a base material were made on a specimen surface. 2: Next, a cellophane adhesive tape was stuck on the two intersecting cuts such that a length of the adhesive part became about 50 mm and was rubbed off with a rubber eraser so that the tape was completely in close contact with the ion-exchange resin coating film. 3: The tape was attached, and after one to two minutes, the tape was instantaneously peeled off orthogonal to the coating film with an end of the tape held. The film 1 from which the ion-exchange resin layer was peeled off was determined as Poor, and the film 1 from which the ion-exchange resin layer was not peeled off and remained was determined as Excellent.

### Ag Ion-Exchange Capacity

The films 2 of Examples 1 to 13 and Comparative Examples 1 and 2 were measured with spectrophotometer to obtain L values, the film with the L value of 60 or more was determined as Excellent, and the film with the L value of less than 60 was determined as Poor.

### Transparency

After 250 µL of the prepared solution of ion-exchange resin was spin-coated on a glass slide surface with a condition at 1000 rpm for 15 seconds and then at 3000 rpm for 60 seconds, and vacuum-dried at 40°C for one hour to form an ion-exchange resin layer on the glass slide surface. The transparency of the ion-exchange resin layer was measured with spectrometer, when the average value of transmittance at a wavelength band of visible light of 380 nm to 780 nm was 80% or more, it was determined as transparent and Excellent, and when the average value of transmittance was less than 80%, it was determined as Poor.

Table 2 shows the evaluation results.

**[Table 2]**

| | | Examples | | | | | | | |
|---|---|---|---|---|---|---|---|---|---|
| | | 1 | 2 | 3 | 4 | 5 | 6 | 7 | 8 |
| Monooctyl maleate (1) | (g) | 2.75 | | 2.09 | | 1.69 | 1.22 | 3.32 | 4.73 |
| 4-Vinylbenzoic acid (2) | (g) | | 1.17 | | 0.685 | | | | |
| Styrene (3) | (g) | 1.25 | 0.83 | 1.91 | | 2.31 | 2.78 | 4.54 | 4.32 |
| Butyl methacrylate (4) | (g) | | | | 1.315 | | | 4.14 | 2.95 |
| Vinyl toluene (5) | (g) | | | | | | | | |
| AIBN | (g) | 0.04 | 0.02 | 0.04 | 0.02 | 0.04 | 0.04 | 0.12 | 0.12 |
| Toluene | (g) | 16 | 4 | 16 | 4 | 16 | 16 | 48 | 48 |
| Ethanol | (g) | | 4 | | 4 | | | | |
| (1)/(3) Molar ratio | | 1/1 | | 1/2 | | 1/3 | 1/5 | | |
| (2)/(3) Molar ratio | | | 1/1 | | | | | | |
| (2)/(4) Molar ratio | | | | | 1/2 | | | | |
| (1)/(3)/(4) Molar ratio | | | | | | | | 1/3/2 | 1/2/1 |
| (1)/(5)/(4) Molar ratio | | | | | | | | | |
| Carboxyl group density | (mol/L) | 3.3 | 4.4 | 2.4 | 3.8 | 2 | 1.5 | 1.3 | 1.9 |
| HSP value (δD) | | 23.701 | 19.65 | 22.77 | 22.3 | 22.19 | 21.52 | 23.02 | 23.2 |
| HSP value (δP) | | 3.59 | 2.5 | 3.01 | 4.16 | 2.65 | 2.24 | 3.49 | 3.52 |
| HSP value (δH) | | 5.85 | 5.1 | 4.45 | 6.66 | 3.59 | 2.59 | 4.27 | 4.67 |
| Distance between HSP values with transparent film | | 11.3 | 4.8 | 9.9 | 8.4 | 9.2 | 8.7 | 10.3 | 10.5 |
| Adhesiveness with transparent film | | Excellent | Excellent | Excellent | Excellent | Excellent | Excellent | Excellent | Excellent |
| Ag ion-exchange capacity (reducing efficiency) | | Excellent | Excellent | Excellent | Excellent | Excellent | Excellent | Poor | Excellent |
| Transparency | | Excellent | Excellent | Excellent | Excellent | Excellent | Excellent | Excellent | Excellent |

| | | Examples | | | | | Comparative Examples | | |
|---|---|---|---|---|---|---|---|---|---|
| | | 9 | 10 | 11 | 12 | 13 | 1 | 2 | |
| Monooctyl maleate (1) | (g) | 5.9 | 5.61 | 3.7 | 3.2 | | | | |
| 4-Vinylbenzoic acid (2) | (g) | | | | | | 1 | | |
| Styrene (3) | (g) | | | | | | | | |
| Butyl methacrylate (4) | (g) | | 3.49 | 2.3 | 2 | | | | |
| Vinyl toluene (5) | (g) | 6.1 | 2.9 | | 0.85 | | | | |
| AIBN | (g) | 0.12 | 0.12 | 0.06 | 0.06 | | 0.01 | | |
| Toluene | (g) | 48 | 48 | 24 | 24 | | 4 | | |
| Ethanol | (g) | | | | | | 4 | | |
| (1)/(3) Molar ratio | | | | | | | | | |
| (2)/(3) Molar ratio | | | | | | | 1/0 | | |
| (2)/(4) Molar ratio | | | | | | | | | |
| (1)/(3)/(4) Molar ratio | | | | | | | | | |
| (1)/(5)/(4) Molar ratio | | 1/2/0 | 1/1/1 | 1/0/1 | 2/1/2 | | | | |
| Carboxyl group density | (mol/L) | 2.4 | 2.3 | 3 | 2.6 | | 7.4 | | |
| HSP value (δD) | | 22.33 | 23.59 | 24.82 | 24.12 | 26.29 | 19.53 | 27.87 | |
| HSP value (δP) | | 2.74 | 3.78 | 4.64 | 4.15 | 5.52 | 3.53 | 6.41 | |
| HSP value (δH) | | 3.81 | 5.22 | 6.91 | 5.95 | 11.34 | 9.02 | 12.55 | |
| Distance between HSP values with transparent film | | 9.4 | 11.1 | 13.3 | 12 | 16.8 | 21.8 | 20.2 | |
| Adhesiveness with transparent film | | Excellent | Excellent | Excellent | Excellent | Excellent | Poor | Poor | |
| Ag ion-exchange capacity (reducing efficiency) | | Excellent | Excellent | Excellent | Excellent | Excellent | Excellent | Excellent | |
| Transparency | | Excellent | Excellent | Excellent | Excellent | Excellent | Excellent | Poor | |

As shown in Table 2, in Examples 1 to 13 in which the distance Ra between the HSP values of the ion-exchange resin and the transparent film was 20 or less, the adhesiveness between the ion-exchange resin and the transparent film was high, and the layer was not peeled. On the other hand, in Comparative Examples 1 and 2 in which the distance Ra between the HSP values of the ion-exchange resin and the transparent film was more than 20, the layer was peeled. Additionally, while the SP value of the monomer constituting the polyamic acid used as the ion-exchange resin was 31.23 in Comparative Example 2, the SP value of the monomer constituting the ion-exchange resin was within the distance of 18 to 30 in Examples 1 to 13. From the aspect of the adhesiveness with the transparent film, it was suggested that the SP value of the monomer constituting the ion-exchange resin was from 18 to 30 in some embodiments.

In Example 7, although the adhesiveness between the ion-exchange resin and the transparent film was sufficiently high, the Ag ion-exchange capacity was comparatively low. Accordingly, the metallic luster was slightly low, and it was suggested that, to show the high metallic luster, the carboxyl group density was 1.5 mol/L or more in some embodiments.

### DESCRIPTION OF SYMBOLS

- 10: Radio wave transmission cover
- 1: Resin substrate
- 2: Transparent film layer
- 3: Transparent ion-exchange resin layer
- 4: Adhesive layer
- 5: Discontinuous film of Ag particles
- 11: Transparent ion-exchange resin layer
- 12: Ag particle

## Claims

1. A radio wave transmission cover comprising:
a resin substrate;
a transparent film layer serving as an exposed portion;
a transparent ion-exchange resin layer disposed between the resin substrate and the transparent film layer;
an adhesive layer disposed between the resin substrate and the transparent ion-exchange resin layer; and
a discontinuous film of Ag particles formed on a surface on the resin substrate side of the transparent ion-exchange resin layer,
wherein a transparent ion-exchange resin of the transparent ion-exchange resin layer has a resin skeleton with an ion-exchangeable functional group, and a distance Ra between a Hansen solubility parameter (HSP) value of the transparent ion-exchange resin and a HSP value of the transparent film is 20 or less.

2. The radio wave transmission cover according to claim 1, wherein a part or all of the Ag particles are embedded in the transparent ion-exchange resin layer.

3. The radio wave transmission cover according to claim 1 or 2, wherein a density of the ion-exchangeable functional group in the transparent ion-exchange resin is 1.5 mol/L or more.

4. The radio wave transmission cover according to any one of claims 1 to 3, wherein the distance Ra between the HSP value of the transparent ion-exchange resin and the HSP value of the transparent film is 16.8 or less.

5. The radio wave transmission cover according to any one of claims 1 to 4, wherein the transparent ion-exchange resin is at least one selected from a copolymer of monooctyl maleate and one or more monomers selected from styrene, butyl methacrylate, and vinyl toluene; and a copolymer of 4-vinylbenzoic acid and one or more monomers selected from styrene, butyl methacrylate, and vinyl toluene.

6. A method for manufacturing the radio wave transmission cover according to any one of claims 1 to 5 comprising:
forming a transparent ion-exchange resin layer on a surface of a transparent film;
treating the transparent ion-exchange resin layer with an Ag ion solution to introduce Ag ions into the transparent ion-exchange resin layer by ion exchange;
treating the transparent ion-exchange resin layer with a reducing agent and depositing Ag particles on a surface of the transparent ion-exchange resin layer to form a discontinuous film of the Ag particles on the surface of the transparent ion-exchange resin layer; and
adhering a resin substrate and a transparent film in which the discontinuous film of the Ag particles is formed on the surface of the transparent ion-exchange resin layer via an adhesive layer with the discontinuous film of the Ag particles side facing the resin substrate.
